(19)

**Europäisches Patentamt**
**European Patent Office**
**Office européen des brevets**

(11)  **EP 4 304 278 B1**

(12)  **EUROPEAN PATENT SPECIFICATION**

(45) Date of publication and mention
of the grant of the patent:
**10.12.2025  Bulletin 2025/50**

(21) Application number: **22763613.1**

(22) Date of filing: **03.03.2022**

(51) International Patent Classification (IPC):
*H04L 5/00* (2006.01)     *H04W 72/12* (2023.01)
*H04W 72/04* (2023.01)    *H04B 7/06* (2006.01)
*H04B 7/024* (2017.01)    *H04B 7/022* (2017.01)

(52) Cooperative Patent Classification (CPC):
**H04L 5/0053;** H04B 7/022; H04L 5/0051;
H04L 5/0055; H04L 5/0094; Y02D 30/70

(86) International application number:
**PCT/KR2022/003024**

(87) International publication number:
**WO 2022/186632 (09.09.2022 Gazette 2022/36)**

(54) **METHOD AND DEVICE FOR PERFORMING COMMUNICATION IN WIRELESS COMMUNICATION SYSTEM**

VERFAHREN UND VORRICHTUNG ZUR DURCHFÜHRUNG VON KOMMUNIKATION IN EINEM
DRAHTLOSKOMMUNIKATIONSSYSTEM

PROCÉDÉ ET DISPOSITIF DE MISE EN OEUVRE DE COMMUNICATION DANS UN SYSTÈME DE
COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **04.03.2021  KR 20210028833**

(43) Date of publication of application:
**10.01.2024  Bulletin 2024/02**

(73) Proprietor: **LG Electronics Inc.
Yeongdeungpo-gu
Seoul 07336 (KR)**

(72) Inventors:
• **KIM, Hyungtae**
**Seoul 06772 (KR)**
• **KANG, Jiwon**
**Seoul 06772 (KR)**

(74) Representative: **Maikowski & Ninnemann
Patentanwälte Partnerschaft mbB
Postfach 15 09 20
10671 Berlin (DE)**

(56) References cited:
WO-A1-2020/165702     WO-A1-2020/198645
US-A1- 2021 022 167

• MODERATOR (QUALCOMM): "Summary of email
discussions [103-e-NR-feMIMO-02] for mTRP
PDCCH enhancements", 3GPP DRAFT;
R1-2009683, 3RD GENERATION PARTNERSHIP
PROJECT (3GPP), 11 November 2020
(2020-11-11), XP051953514
• ERICSSON: "Remaining update for PDSCH TCI
state MAC CE", 3GPP DRAFT; R2-2001126, 3RD
GENERATION PARTNERSHIP PROJECT (3GPP),
13 February 2020 (2020-02-13), XP051848743
• ERICSSON: "PDSCH demodulation
requirements with enhanced transmission
schemes in HST scenario", 3GPP DRAFT;
R4-2101440, 3RD GENERATION PARTNERSHIP
PROJECT (3GPP), 15 January 2021 (2021-01-15),
XP051972544
• ZTE: "Enhancements on beam management for
multi-TRP", 3GPP DRAFT; R1-2100288, 3RD
GENERATION PARTNERSHIP PROJECT (3GPP),
19 January 2021 (2021-01-19), XP051970903

EP 4 304 278 B1

**Description**

[Technical Field]

The present disclosure relates to a wireless to a method and a user equipment.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

WO 2020/198645 A1 discloses that a wireless device receives one or more radio resource control (RRC) messages. The RRC messages comprise: configuration parameters for a configured uplink grant; and a first control resource set (CORESET) group index associated with the configured uplink grant. A determination is made that: a physical uplink control channel (PUCCH) resource for an uplink control information (UCI) overlaps in time with a physical uplink shared channel (PUSCH) resource for the configured uplink grant; and a CORESET group index associated with the PUCCH resource is the same as the first CORESET group index. Based on the determination, the UCI is multiplexed in the PUSCH resource. The UCI is transmitted via the PUSCH resource.

US 2021/0022167 A1 discloses that a user equipment (UE) receives, on a particular CORESET, downlink control information (DCI) scheduling a physical downlink shared channel (PDSCH) or a PUSCH. The UE is configured with multi-DCI based multi-transmission/reception point (TRP) operation. The UE determines, based at least in part on the UE being configured with multi-DCI based multi-TRP operation, a fixed higher layer index that identifies a CORESET group with which the particular CORESET is associated. The UE performs an operation, associated with receiving the PDSCH or transmitting the PUSCH, based at least in part on the fixed higher layer index identifying the CORESET group with which the particular CORESET is associated.

[Disclosure]

[Technical Problem]

The technical object of the present disclosure is to provide a method and a user equipment for performing communication in a wireless communication system.

An intention is to perform communication based on a specific CORESET pool when a plurality of control resource set (CORESET) pools are configured in a wireless communication system.

[Technical Solution]

The invention is defined by the independent claims. Features of certain embodiments are defined in the dependent claims.

[Technical Effects]

A method and a user equipment for performing communication in a wireless communication system are provided.

According to an embodiment of the present disclosure, when a plurality of CORESET pools are configured in a wireless communication system, communication based on a specific CORESET pool may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method of transmitting multiple TRPs in a wireless communication system to which the present disclosure may be applied.
FIG. 8 is a diagram for describing operations of a user equipment (UE) and a base station in a wireless communication system to which the present disclosure may be applied.
FIG. 9 is a diagram for describing operations of a UE and a base station in a wireless communication system to which the present disclosure can be applied.
FIG. 10 is a diagram for describing an operation performed by a UE according to an embodiment of the present disclosure.
FIG. 11 is a diagram for describing an operation performed by a base station according to an embodiment of the present disclosure.
FIG. 12 is a diagram for describing a signaling procedure of a network side and a UE according to an embodiment of the present disclosure.
FIG. 13 illustrates a block configuration diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB (evolved-NodeB), a gNB(Next Generation NodeB), a BTS(base transceiver system), an Access Point (AP), a Network(5G network), an AI (Artificial Intelligence) system/module, an RSU(road side unit), a robot, a drone (UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16 (WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212 (multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality

- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

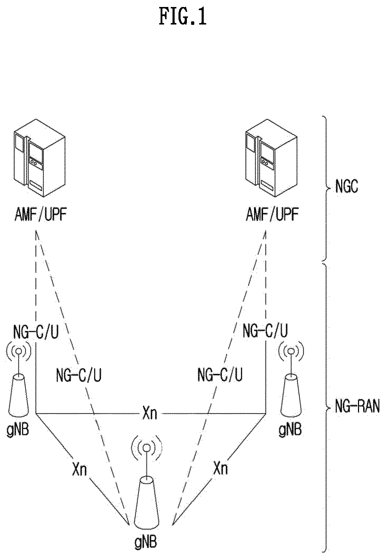

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

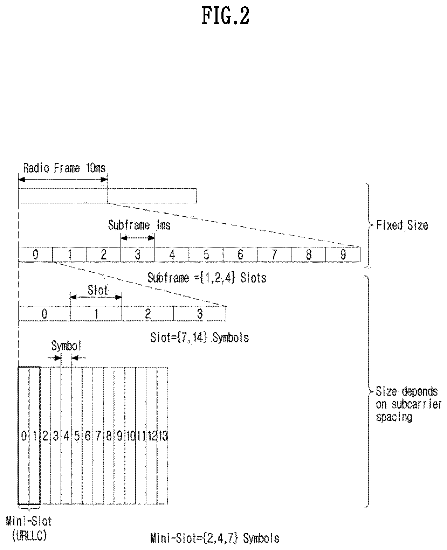

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10ms$. Here, a radio frame is configured with 10 subframes having a duration of $T_{sf} = (\Delta f_{max} N_f/1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \{0,...,N_{slot}^{subframe,\mu}-1\}$ in a subframe and are numbered in an increasing order of $n_{s,f}^\mu \in \{0,...,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

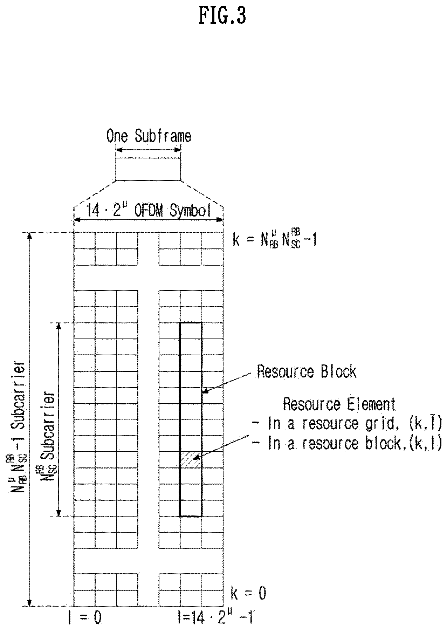

FIG. 2 is an example on $\mu=2$ (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied. In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain. Point A plays a role as a common reference point of a resource block grid and is obtained as follows. offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

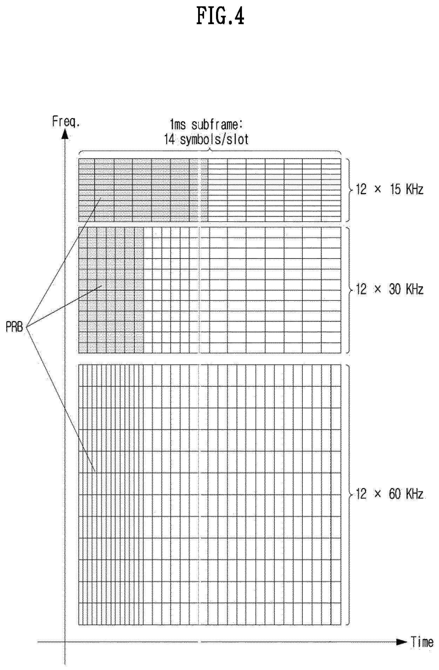

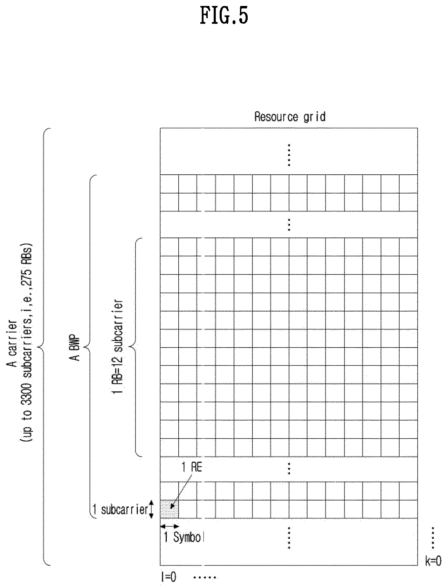

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

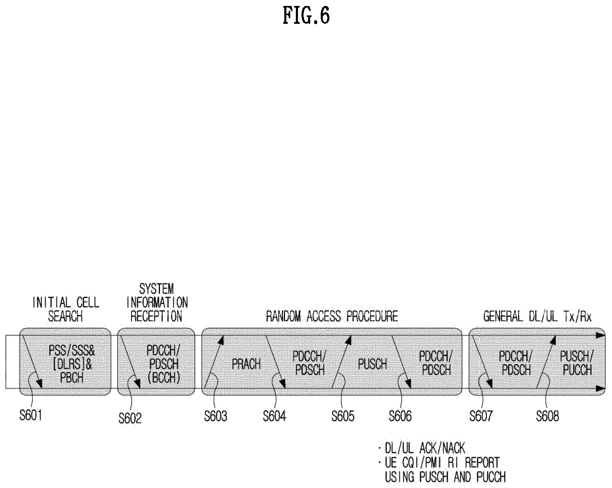

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH (Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted. Next, DCI formats 1_0, 1_1 and 1_2 may include resource information (e.g., frequency resource allocation, time resource allocation, VRB(virtual resource block)-PRB(physical resource block) mapping, etc.), information related to a transport block (TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

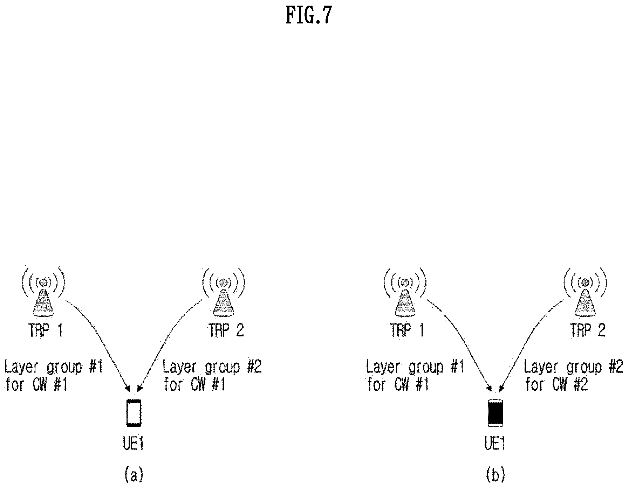

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Regarding a method for multiple TRPs based URLLC scheduled by single DCI, the following methods are discussed.

1) Method 1 (SDM): Time and frequency resource allocation is overlapped and n (n<=Ns) TCI states in a single slot

1-a) Method 1a.

- The same TB is transmitted in one layer or layer set at each transmission time (occasion) and each layer or each layer set is associated with one TCI and one set of DMRS port(s).
- A single codeword having one RV is used in all spatial layers or all layer sets. With regard to UE, different coded bits are mapped to a different layer or layer set by using the same mapping rule

1-b) Method 1b

- The same TB is transmitted in one layer or layer set at each transmission time (occasion) and each layer or each layer set is associated with one TCI and one set of DMRS port(s).
- A single codeword having one RV is used in each spatial layer or each layer set. RV(s) corresponding to each spatial layer or each layer set may be the same or different.

1-c) Method 1c

The same TB having one DMRS port associated with multiple TCI state indexes is transmitted in one layer at one transmission time (occasion) or the same TB having multiple DMRS ports one-to-one associated with multiple TCI state indexes is transmitted in one layer.

In case of the above-described method 1a and 1c, the same MCS is applied to all layers or all layer sets.

2) Method 2 (FDM): Frequency resource allocation is not overlapped and n (n<=Nf) TCI states in a single slot

- Each non-overlapping frequency resource allocation is associated with one TCI state.

The same single/multiple DMRS port(s) are associated with all non-overlapping frequency resource allocation.

2-a) Method 2a

- A single codeword having one RV is used for all resource allocation. With regard to UE, common RB matching (mapping of a codeword to a layer) is applied to all resource allocation.

2-b) Method 2b

- A single codeword having one RV is used for each non-overlapping frequency resource allocation. A RV corresponding to each non-overlapping frequency resource allocation may be the same or different.

For the above-described method 2a, the same MCS is applied to all non-overlapping frequency resource allocation.

3) Method 3 (TDM): Time resource allocation is not overlapped and n (n<=Nt1) TCI states in a single slot

- Each transmission time (occasion) of a TB has time granularity of a mini-slot and has one TCI and one RV.
- A common MCS is used with a single or multiple DMRS port(s) at all transmission time (occasion) in a slot.
- A RV/TCI may be the same or different at a different transmission time (occasion).

4) Method 4 (TDM): n (n<=Nt2) TCI states in K (n<=K) different slots

- Each transmission time (occasion) of a TB has one TCI and one RV.
- All transmission time (occasion) across K slots uses a common MCS with a single or multiple DMRS port(s).
- A RV/TCI may be the same or different at a different transmission time (occasion).

Downlink multiple TRP (M-TRP) URLLC transmission operation

DL MTRP URLLC means that multiple TRPs transmit the same data (e.g., the same TB)/DCI by using a different layer/time/frequency resource. For example, TRP 1 transmits the same data/DCI in resource 1 and TRP 2 transmits the same data/DCI in resource 2.

That is, when the DL M-TRP URLLC transmission scheme is configured, the UE may receive the same data/DCI using different space/time/frequency resources. At this time, the UE may receive an indication of the QCL RS/type (i.e., DL TCI state) used in the space/time/frequency resource receiving the corresponding data/DCI from the base station.

For example, when the same data/DCI is received in resource 1 and resource 2, a DL TCI state used in resource 1 and a DL TCI state used in resource 2 may be configured. UE may achieve high reliability because it receives the same data/DCI through resource 1 and resource 2. Such DL MTRP URLLC may be applied to a PDSCH/a PDCCH.

UL MTRP-URLLC means that multiple TRPs receive the same data/UCI(uplink control information) from any UE by using a different layer/time/frequency resource. For example, TRP 1 receives the same data/DCI from UE in resource 1 and TRP 2 receives the same data/DCI from UE in resource 2 and shares received data/DCI through a backhaul link connected between TRPs.

That is, when the UL M-TRP URLLC transmission scheme is configured, the UE may transmit the same data/UCI to each TRP using different space/time/frequency resources. At this time, the UE may be indicated by the base station of the Tx beam and Tx power (i.e., UL TCI state) to be used in space/time/frequency resources transmitting the same data/UCI. For example, when the same data/UCI is transmitted in resource 1 and resource 2, the UE may be indicated by the base station of the UL TCI state used in resource 1 and the UL TCI state used in resource 2. Such UL MTRP URLLC may be applied to PUSCH/PUCCH.

Also, in describing the present disclosure, when receiving/transmitting data/DCI/UCI through a specific space/time/frequency resource, using (or mapping) a specific TCI state (or TCI) may mean, in the case of DL, that a channel is estimated from a DMRS using a QCL type and a QCL RS indicated by a specific TCI state in a specific space/time/frequency resource, and data/DCI/UCI is received/demodulated through the estimated channel.

In addition, when receiving/transmitting data/DCI/UCI through specific space/time/frequency resources, using (or mapping) a specific TCI state (or TCI) means, in the case of UL, may mean that DMRS and data/UCI are transmitted/modulated using a Tx beam and/or Tx power indicated by a specific TCI state in a specific space/time/frequency resource.

And, the UL TCI state may include Tx beam or Tx power information of the UE. In addition, the base station may configure spatial relation information and the like for the UE through other parameters instead of the TCI state.

For example, the UL TCI state may be directly indicated to the UE through a UL grant DCI. Alternatively, the UL TCI state may mean spatial relationship information of an SRS resource indicated through an SRS resource indicator (SRI) field of the UL grant DCI. Alternatively, the UL TCI state may mean an open loop (OP) Tx power control parameter connected to a value indicated through the SRI field of the UL grant DCI.

Here, the OL Tx power control parameter may include, for example, j (index and alpha for OP parameter(s) Po (up to 32 parameter value sets per cell), $q_d$ (indices of DL RS resources for PL (path loss) measurement (up to 4 measurements per cell), or/and I (closed loop power control process index (up to 2 processes per cell)).

As another embodiment of the present disclosure, the M-TRP eMBB transmission scheme refers to a scheme in which M-TRP transmits different data/DCI using different space/time/frequency resources. If the M-TRP eMBB transmission method is configured, the UE may receive a plurality of TCI states from the base station through DCI, and may assume that data received using the QCL RS indicated by each of the plurality of TCI states is different data.

In addition, since the RNTI for M-TRP URLLC and the RNTI for M-TRP eMBB are separately used, the UE may determine whether specific transmission/reception is M-TRP URLLC transmission/reception or M-TRP eMBB transmission/reception. For example, when the RNTI for URLLC is used and CRC is masked for DCI, the UE may recognize the transmission as URLLC transmission. And, when the RNTI for eMBB is used and CRC masked for DCI, the UE may identify the corresponding transmission as eMBB transmission. As another example, the base station may configure the M-TRP URLLC transmission/reception method or the M-TRP eMBB transmission/reception method to the UE through new signaling.

For convenience of description of the present disclosure, it is assumed that 2 TRPs cooperate with each other to perform transmission/reception operations, but is not limited thereto. That is, the present disclosure may be extended and applied even in a multiple TRP environment of 3 or more, and may be extended and applied even in an environment where transmission/reception is performed using different panels or beams in the same TRP. The UE may recognize different TRPs as different TCI states. When the UE transmits/receives data/DCI/UCI using TCI state 1, it means that data/DCI/UCI/ is transmitted/received from (or through TRP 1).

The present disclosure may be utilized in a situation in which an MT-RP cooperatively transmits a PDCCH (repeatedly transmits the same PDCCH or transmits dividedly). In addition, the present disclosure may be utilized in a situation where the M-TRP cooperatively transmits PDSCH or cooperatively receives PUSCH/PUCCH.

Also, in describing the present disclosure, repetitive transmission of the same PDCCH by a plurality of base stations (i.e., M-TRPs) may mean that the same DCI is transmitted through a plurality of PDCCH candidates, and it means that multiple base stations repeatedly transmit the same DCI. Here, two DCIs having the same DCI format/size/payload can be regarded as the same DCI.

Alternatively, if the scheduling result is the same even though the payloads of the two DCIs are different, the two DCIs may be regarded as the same DCI. For example, the time domain resource allocation (TDRA) field of the DCI may relatively determine a slot/symbol position of data and a slot/symbol position of A(ACK)/N(NACK) based on a DCI reception time point.

In this case, when the DCI received at time n and the DCI received at time n+1 indicate the same scheduling result to the UE, the TDRA fields of the two DCIs are different, and as a result, the DCI payloads are different. Accordingly, when the scheduling result is the same even though the payloads of the two DCIs are different, the two DCIs may be regarded as the same DCI. Here, the number of repetitions R may be directly instructed by the base station to the UE or mutually promised.

Alternatively, even if the payloads of the two DCIs are different and the scheduling results are not the same, if the scheduling result of one DCI is a subset of the scheduling result of the other DCI, the two DCIs may be regarded as the same DCI.

For example, if the same data is TDM and repeatedly transmitted N times, DCI 1 received before the first data indicates data repetition (or scheduling) N times, and DCI 2 received before the second data indicates N-1 data repetition (scheduling). At this time, the scheduling result (or data) of DCI 2 becomes a subset of the scheduling result (or data) of DCI 1, and both DCIs have scheduling results for the same data. Therefore, even in this case, the two DCIs may be regarded as the same DCI.

And, in explaining the present disclosure, the operation of dividing and transmitting the same PDCCH by a plurality of base stations (i.e., M-TRP) may mean that one DCI is transmitted through one PDCCH candidate, but TRP 1 transmits some resources defined for the corresponding PDCCH candidate, and TRP 2 transmits the remaining resources.

For example, when TRP 1 and TRP 2 divide and transmit PDCCH candidates corresponding to the aggregation level m1 + m2, PDCCH candidates are divided into PDCCH candidate 1 corresponding to aggregation level m1 and PDCCH candidate 2 corresponding to aggregation level m2, and TRP 1 may transmit PDCCH candidate 1 and TPR 2 may transmit PDCCH candidate 2. In this case, TRP 1 and TRP 2 may transmit PDCCH candidate 1 and PDCCH candidate 2 using different time/frequency resources. After receiving PDCCH candidate 1 and PDCCH candidate 2, the terminal may generate a PDCCH candidate corresponding to the merge level m1 + m2 and attempt DCI decoding.

At this time, a scheme in which the same DCI is divided and transmitted to several PDCCH candidates may be implemented in the following two schemes.

In the first method, a DCI payload (e.g., control information + CRC) is encoded through one channel encoder (e.g., a polar encoder) and transmitted in two TRPs. That is, the first method refers to a method of dividing coded bits obtained according to an encoding result into two TRPs and transmitting them. Here, the entire DCI payload may be encoded in the coded bits transmitted by each TRP, but is not limited thereto, and only a part of the DCI payload may be encoded.

The second method is a method of dividing a DCI payload (e.g., control information + CRC) into two DCIs (e.g., DCI 1 and DCI 2) and then encoding each of them through a channel encoder (e.g., a polar encoder). Then, each of the two TRPs may transmit coded bits corresponding to DCI 1 and coded bits corresponding to DCI 2 to the UE.

Multiple base stations (M-TRPs) dividing/repeatedly transmitting the same PDCCH over multiple MOs (monitoring occasions) may mean that 1) coded bits encoding the entire DCI content of the corresponding PDCCH are repeatedly transmitted through each MO for each base station (S-TRP), 2) coded bits encoding the entire DCI content of the corresponding PDCCH are divided into a plurality of parts, and each base station (S-TRP) transmits different parts through each MO, or 3) the DCI content of the corresponding PDCCH is divided into a plurality of parts, and different parts are encoded (i.e., separately encoded) for each base station (S-TRP) and transmitted through each MO.

Repeatedly/divided transmission of the PDCCH may be understood as transmission of the PDCCH multiple times over several transmission occasions (TOs).

Here, TO may mean a specific time/frequency resource unit in which the PDCCH is transmitted. For example, when the PDCCH is transmitted multiple times (to a specific RB) over slots 1, 2, 3, and 4, TO may mean each slot. As another example, when the PDCCH is transmitted multiple times (in a specific slot) over RB sets 1, 2, 3, and 4, TO may mean each RB set. As another example, if the PDCCH is transmitted multiple times over different times and frequencies, TO may mean each time/frequency resource. In addition, a different TCI state used for DMRS channel estimation may be configured for each TO, and TOs with different TCI states may be assumed to be transmitted by different TRPs/panels.

Repetitive or divided transmission of PDCCHs by a plurality of base stations means that PDCCHs are transmitted over multiple TOs, and the union of TCI states configured in the corresponding TOs is composed of two or more TCI states. For example, when the PDCCH is transmitted over TO 1,2,3,4, TCI states 1,2,3,4 may be configured in each of TO 1,2,3,4, and it means that TRP i cooperatively transmitted the PDCCH in TO i.

In describing the present disclosure, if the UE repeatedly transmits the same PUSCH to a plurality of base stations (i.e., M-TRPs), it may mean that the UE transmits the same data through a plurality of PUSCHs, and each PUSCH may be transmitted while being optimized for UL channels of different TRPs.

For example, the UE may repeatedly transmit the same data through PUSCH 1 and PUSCH 2. At this time, PUSCH 1 is transmitted using UL TCI state 1 for TRP 1, and PUSCH may be transmitted by scheduling a value optimized for a channel of TRP 1 through link adaptation such as a precoder/MCS. PUSCH 2 is transmitted using UL TCI state 2 for TRP 2, and link adaptation such as a precoder/MCS is also scheduled with a value optimized for the channel of TRP 2, and PUSCH may be transmitted. In this case, PUSCH 1 and PUSCH 2 that are repeatedly transmitted may be transmitted at different times and may be TDM, FDM, or SDM.

Also, in describing the present disclosure, an operation in which the UE divides and transmits the same PUSCH to a plurality of base stations (i.e., M-TRP) may mean that one data is transmitted through one PUSCH, but resources allocated to the PUSCH are divided and transmitted in an optimized manner for UL channels of different TRPs.

For example, the UE may transmit the same data through 10 symbol PUSCH. At this time, the first 5 symbols among 10 symbols can be transmitted using UL TCI state 1 for TRP 1, and the UE may transmit a 5-symbol PUSCH (through TRP 1) by receiving a scheduling value optimized for link adaptation such as a precoder/MCS and a channel of TRP 1. The remaining 5 symbols may be transmitted using UL TCI state 2 for TRP 2, and the UE may transmit the remaining 5 symbol PUSCH (via TRP 2) by receiving a scheduling value optimized for link adaptation such as precoder/MCS and the channel of TRP 2.

In the above example, a method of dividing one PUSCH into time resources and TDM for transmission toward TRP 1 and transmission toward TRP 2 has been described. However, the present disclosure is not limited thereto, and the UE may divide and transmit the same PUSCH to a plurality of base stations by exclusively using the FDM/SDM scheme.

The UE may repeatedly transmit the PUCCH to a plurality of base stations (similar to PUSCH transmission) or divide and transmit the same PUCCH.

The present disclosure may be extended and applied to various channels such as PUSCH/-PUCCH/PDSCH/PDCCH. In addition, the present disclosure may be extended and applied to both the case of repeatedly transmitting the channel to different spatial/time/frequency resources and the case of dividing and transmitting the channel.

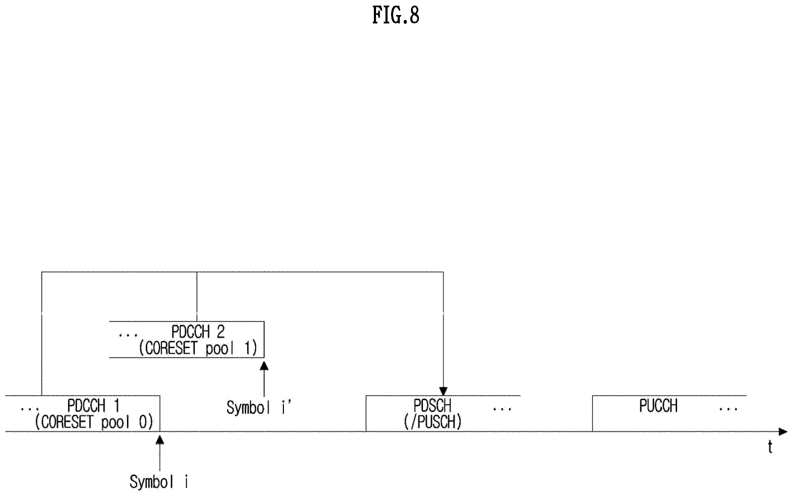

FIG. 8 is a diagram for describing an M-TRP based PDCCH repeated transmission operation according to an embodiment of the present disclosure.

FIG. 8 illustrates an embodiment in which PDCCH 1 (or DCI 1 transmitted through PDCCH 1) and PDCCH 2 (or DCI 2 transmitted through PDCCH 2) are transmitted through CORESETs belonging to different CORESET pools (CORESET pool 0 and CORESET pool 1) (or an embodiment in which DCI 1 and DCI 2 are transmitted through different search space sets).

Here, DCI 1 and DCI 2 are the same DCIs transmitted through TRP 1 and TRP 2 (i.e., DL beam 1 and DL beam 2), respectively. That is, each TRP may improve reliability by repeatedly transmitting (or dividing and transmitting) the same DCI to the UE.

At this time, it is not clear which CORESET pool the scheduled PDSCH (/PUSCH) and ACK/NACK PUCCH (i.e., PUCCH transmitting ACK/NACK (feedback)) are associated with (or belong to). Accordingly, problems described later may occur.

To solve this, it may be assumed that a representative CORESET pool is determined among CORESET pools to which DCI scheduling PDSCH (/PUSCH) and ACK/NACK PUCCH belongs, and PDSCH (or/and PUCCH) and ACK/-NACK PUCCH are associated with a representative CORESET pool.

Here, a method of determining a representative CORESET pool among a plurality of CORESET pools (e.g., CORESET pool 0 and CORESET pool 1 of FIG. 8) may be implemented in a manner described later. However, the method described below is only an example, and a representative CORESET pool may be determined in an additional method.

As an embodiment of the present disclosure, a base station may indicate a representative CORESET pool among CORESET pools to which repeatedly transmitted DCI belongs to the UE through RRC/MAC-CE signaling or DCI.

As another embodiment of the present disclosure, a base station and a UE may promise (or define) a specific CORESET pool among CORESET pools to which repeatedly transmitted DCI belongs as a representative pool, as shown in the following example.

For example, a CORESET pool having the lowest index value (or the highest pool index) among CORESET pools to which repeatedly transmitted DCIs belong may be determined as the representative CORESET pool.

As another example, a CORESET pool to which a CORESET having the lowest (or highest) CORESET ID among CORESETs to which repeatedly transmitted DCIs belong may be determined as a representative CORESET pool.

As another example, a CORESET pool to which a CORESET connected to the lowest (or highest) search space set ID among the search space sets to which the repeatedly transmitted DCI belongs may be determined as the representative CORESET pool.

As another embodiment of the present disclosure, a representative CORESET pool may be determined based on a time order (or/and frequency order) in which DCI is received (or appears). For example, a CORESET pool associated with a DCI appearing first (or/and corresponding to the lowest subcarrier index) among repeatedly transmitted DCIs may be determined as a representative CORESET pool.

Hereinafter, an embodiment for resolving ambiguity that may occur when DCI 1 and DCI 2 are transmitted through CORESETs belonging to different CORESET pools (CORESET pool 0 and CORESET pool 1) will be described.

Embodiment 1

Ambiguity may occur as to which of the TCI table of CORESET pool 0 (i.e., a table in which TCI state values for codepoints in TCI fields are defined) and the TCI table of CORESET pool 1 is used to interpret the TCI field (in the DCI).

That is, when the TCI table is configured differently for each CORESET pool and the TCI state is indicated through the TCI field in the DCI, it may be ambiguous whether to utilize (or interpret) the TCI state value based on the TCI table configured for which CORESET pool (i.e., indicated by the TCI table).

Therefore, a representative CORESET pool among a plurality of CORESET pools may be determined, and the UE interprets the TCI field (in the DCI) using the TCI table defined in the representative CORESET pool and determines the TCI state for PDSCH DMRS reception.

As another example, as shown in FIG. 8, when DCI is repeatedly transmitted using different CORESET pools, the above-mentioned ambiguity may be solved by configuring a common TCI table for each CORESET pool.

As another example, even if different TCI tables are configured for each CORESET pool, the base station may configure the TCI state value indicated by DCI 1 using the TCI table of CORESET pool 0 and the TCI state value indicated by DCI 2 using the TCI table of CORESET pool 1 to always be the same. At this time, when the TCI state value indicated by each DCI is different, the UE may ignore the corresponding DCI. Alternatively, the UE may not expect that the TCI state value indicated by the DCI is differently indicated.

Embodiment 2

When the TCI field does not exist in the DCI, the UE may receive the PDSCH DMRS using the CORESET TCI of the DCI that scheduled the PDSCH (i.e., the TCI state configured for the CORESET).

Referring to FIG. 8, since there are a plurality of CORESETs of the PDCCH (or DCI transmitted through the PDCCH) scheduling the PDSCH, it may be ambiguous which CORESET TCI to use when the TCI field does not exist in the DCI. In order to solve this problem, the UE may receive the PDSCH DMRS using the representative CORESET pool associated with the PDSCH and the TCI state of the CORESET belonging to the same pool.

Embodiment 3

If the UE has the capability to receive a default PDSCH beam for each CORESET pool, the default beam of a specific PDSCH (i.e., when the time offset between DCI reception and the corresponding PDSCH (e.g., DCI-to-PDSCH offset) is less than a value corresponding to a predetermined threshold (e.g., upper layer parameter ('timeDuration-ForQCL')), the TCI state used for PDSCH reception) may be determined as CORESETs of a CORESET pool to which the DCI scheduling the PDSCH belongs.

Referring to Figure 8, since there are a plurality of CORESET pools to which the PDCCH scheduling the PDSCH (or DCI transmitted through the PDCCH) belongs, it may be ambiguous which CORESETs of which CORESET pool should be used to determine the default beam. To solve this problem, a default beam may be determined with CORESETs belonging to a representative CORESET pool related to the PDSCH.

As another embodiment, if the offset between the DCI triggering the AP (aperiodic) CSI-RS and the AP CSI-RS (corresponding thereto) is smaller than a specific threshold value, the UE may receive the AP CSI-RS from the base station using a default beam. At this time, since there are a plurality of CORESET pools to which the DCI belongs, it may be ambiguous as to which CORESETs of which CORESET pool should be used to determine the default beam. To solve this problem, a representative CORESET pool among a plurality of CORESET pools may be determined, and a default beam may be determined based on a CORESET belonging to the same pool as the representative CORESET pool.

Embodiment 4

The base station may schedule so that collision (i.e., resource overlap) does not occur between PUCCH resources associated with different CORESET pools or between PUCCH and PUSCH associated with different CORESET pools. This is to prevent multiplexing and piggyback between UCIs to be transmitted to each TRP, and to prevent introduction of a complicated dropping rule to be applied when a collision occurs.

Referring to Figure 8, as both PDCCH 1 of CORESET pool 0 (or DCI 1 transmitted through PDCCH 1) and PDCCH 2 of CORESET pool 1 (or DCI 2 transmitted through PDCCH 2) schedule PUCCH resources, it may be ambiguous which CORESET pool the PUCCH resource is associated with.

Accordingly, a representative CORESET pool for PUCCH resources may be configured. The base station may schedule so that collision does not occur with PUCCH resources/PUSCHs associated with other CORESET pools other than the corresponding representative CORESET pool.

Alternatively, assuming that the corresponding PUCCH resource belongs to both CORESET pools, and the base station may schedule (conservatively) such that collisions between the corresponding PUCCH resource and any other PUCCH/PUSCH (i.e., all PUSCH/PUCCHs associated with CORESET pool 0 or 1) do not occur.

Alternatively, assuming that the corresponding PUCCH resource belongs to both CORESET pools, a collision between the corresponding PUCCH resource and any other PUCCH/PUSCH (i.e., all PUSCH/PUCCHs associated with CORESET pool 0 or 1) may occur. If a collision occurs between the corresponding PUCCH resource and any other PUCCH/PUSCH, the corresponding PUCCH resource may be multiplexed/dropped assuming that it has the same CORESET pool as the other PUCCH/PUSCH.

In addition, when different PUCCH resource sets are configured for each CORESET pool, whether to interpret the PUCCH resource indicator (PRI) value indicated by the DCI based on the PUCCH resource set of CORESET pool 0 or the PUCCH resource set of CORESET pool 1 may be ambiguous.

To solve this problem, a representative CORESET pool may be introduced for PUCCH resource selection. That is, the PRI value indicated by the DCI may be interpreted based on the PUCCH resource set of the representative CORESET pool, and the UE may transmit the PUCCH to the base station based on the PRI value interpreted based on the PUCCH resource set of the representative CORESET pool. However, the above-described method is only an example, and a common PUCCH resource set may be configured in each CORESET pool.

Embodiment 5

When configuring a plurality of CORESET pools for a UE, Encoding of ACK/NACK of PDSCHs associated with different CORESET pools may be configured separately (i.e., per CORESET pool) or jointly (or commonly).

When ACK/NACK encoding for PDSCH is individually configured, ACK/NACK of PDSCH associated with CORESET pool may be encoded using different codebooks.

Referring to FIG. 8, as the CORESET pool associated with the PDSCH is ambiguous, ambiguity as to which CORESET pool codebook should encode the ACK/NACK of the corresponding PDSCH may also occur.

In order to solve this problem, a representative CORESET pool may be configured, and the PDSCH of FIG. 8 may be related to the representative CORESET pool (i.e., the representative CORESET pool of the PDSCH may be configured). In addition, ACK/NACK of the PDSCH may be encoded together with a codebook corresponding to a representative CORESET pool.

When ACK/NACK encoding for PDSCH is jointly configured, in order to determine the encoding order and the last PRI, the pool index of the DCI that scheduled the PDSCH (i.e., the index of the CORESET pool associated with the DCI) may be used.

For example, in order to determine the ACK/NACK encoding order, the order of downlink assignment index (DAI) values indicated by DCI may be used. Here, in order to determine the DAI value, a PDCCH monitoring occasion, a cell index, and a CORESET pool index may be used.

The PUCCH resource through which the encoded ACK/NACK is transmitted may be determined as the last PRI among DCI PRIs that schedule the PDSCH (i.e., the PRI indicated by the last DCI received) . At this time, in order to determine the last PRI, a PDCCH monitoring opportunity and a CORESET pool index may be used.

Here, an index of a representative CORESET pool (i.e., a representative CORESET pool of PDSCH) may be used to determine the DAI value and the PRI.

As an embodiment of the present disclosure, when the same DCI is repeatedly transmitted through different CORESET pools, the base station and the UE may promise to set only a joint ACK/NACK encoding operation. Since repeated transmission of the same DCI is applicable in an ideal environment where backhaul delay between base stations is very small, the need for individual ACK/NACK encoding settings (usable when backhaul delay is large) may be reduced.

Embodiment 6

The base station may perform scheduling so that collision (i.e., resource overlap) between PUSCHs associated with different CORESET pools or between PUSCHs and PUCCHs associated with different CORESET pools does not occur.

When two DCIs belonging to different CORESET pools (i.e., DCIs that are repeatedly transmitted) schedule one PUSCH, which CORESET pool the corresponding PUSCH is associated with may be ambiguous. In order to solve this problem, a representative CORESET pool associated with the corresponding PUSCH among CORESET pools associated with the corresponding DCI may be configured.

Alternatively, assuming that the PUSCH resource belongs to both CORESET pools, the base station may schedule (conservatively) such that collisions between the corresponding PUSCH resource and any other PUCCH/PUSCH (all PUSCH/PUCCHs associated with CORESET pool 0 or 1) do not occur.

Alternatively, assuming that the corresponding PUSCH resource belongs to both CORESET pools, a collision may occur between the corresponding PUSCH resource and any other PUCCH/PUSCH (all PUSCH/PUCCHs associated with CORESET pool 0 or 1). If a collision occurs between the corresponding PUSCH resource and any other PUCCH/PUSCH, assuming that the PUSCH resource is associated with the same CORESET pool as any other PUCCH/PUSCH (i.e., has the same CORESET pool), multiplexing/dropping/piggyback may be performed on the corresponding PUSCH resource.

Embodiment 7

When a plurality of CORESET pool indexes are configured for a UE, out of order operation may be allowed.

Specifically, when PDCCHs scheduling PDSCHs are associated with different control resource sets having different CORESET pool index values, the following operation may be allowed.

For example, for any two HARQ process IDs in a given scheduled cell, if the UE is scheduled to start receiving the first PDSCH starting at symbol j by the PDCCH associated with the CORESET Pool index value ending at symbol i, the UE may be scheduled to receive a PDSCH starting earlier than the end of the first PDSCH together with a PDCCH associated with another CORESET pool index ending later than symbol i.

As another example, if the UE is configured by a higher layer parameter (e.g., 'PDCCH-Config') including two different CORESET pool index values of the control resource set for the active BWP of the serving cell and if a PDCCH scheduling two non-overlapping PUSCHs in the time domain is associated with a control resource set having a different CORESET pool index value, for any two HARQ process IDs in a given scheduled cell, when scheduled for the UE to start the first PUSCH transmission starting at symbol j by the PDCCH associated with the CORESET pool index value ending at symbol i, the UE may be scheduled to transmit a PUSCH starting earlier than the end of the first PUSCH by a PDCCH associated with another CORESET pool index value ending later than symbol i.

However, as shown in FIG. 8, as the CORESET pool associated with the PDSCH is ambiguous, the application of non-sequential operation may also be ambiguous.

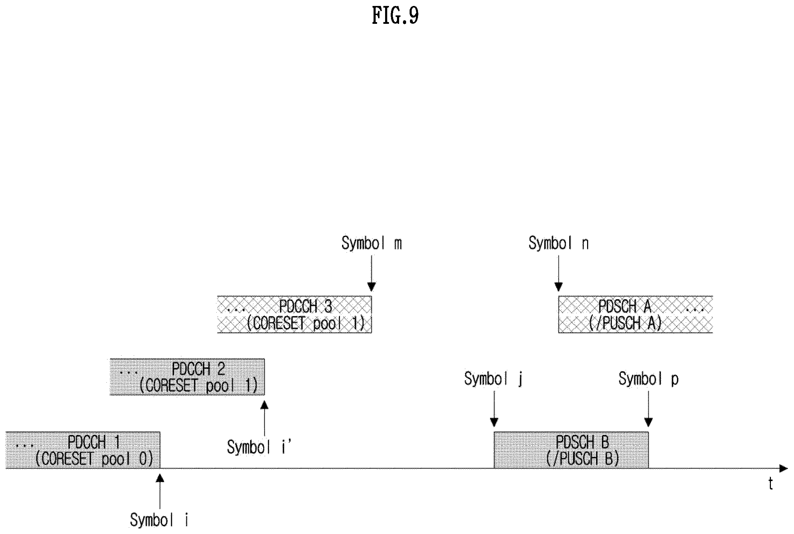

Referring to FIG. 9, PDCCH 1 (or DCI 1 transmitted through PDCCH 1) and PDCCH 2 (or DCI 2 transmitted through PDCCH 2) schedule PDSCH B (/PUSCH B) including (same) scheduling information (or DCI), and PDCCH 3 belonging to CORESET pool 1 may schedule another PDSCH A (/PUSCH A).

Here, PDCCH 1 may end at symbol i, PDCCH 2 may end at symbol i' later than symbol i, and PDCCH 3 may end at symbol m later than symbol i'.

In addition, the fact that non-sequential operation is applicable (Or, scheduling of PDSCH A/PUSCH A is possible) may mean that PDSCH A/PUSCH A may be scheduled to start before the end of PDSCH B/PUSCH B (or last symbol p of PDSCH B/PUSCH B). That is, when non-sequential operation is applied, the start symbol n of PDSCH A/PUSCH A may be scheduled to be a symbol earlier than the last symbol p of PDSCH B/PUSCH B. The operation of FIG. 9 illustrates an operation performed in one UE.

At this time, if the PDCCH 1 and PDSCH B pair and the PDCCH 3 and PDSCH A pair are compared, the above-described non-sequential operation (condition) is satisfied. That is, since the CORESET pools associated with PDCCH 1 and PDCCH 3 are different from each other, the condition of non-sequential operation for PDCCH 3 is satisfied, and accordingly, scheduling of PDSCH A may be possible. However, when the PDCCH 2 and PDSCH B pair and the PDCCH 3 and PDSCH A pair are compared, PDCCH 2 and PDCCH 3 are all related to the same CORESET pool (i.e., CORESET pool 1), so the condition of non-sequential operation is not satisfied. Accordingly, scheduling of PDSCH A may be impossible.

That is, since the base station and the UE may be ambiguous whether to apply the out-of-order operation as shown in FIG. 9 (i.e., whether scheduling of PDSCH A (/PUSCH A) is allowed), the following embodiment may be applied to solve this ambiguity.

A pair of PDCCH 1 and PDSCH B and a pair of PDCCH 3 and PDSCH A are compared to check whether the condition of non-sequential operation is satisfied and by comparing the pair of PDCCH 2 and PDSCH B and the pair of PDCCH 3 and PDSCH A, it may be checked whether the condition of out-of-order operation is satisfied. When both conditions are satisfied, the base station and the terminal can promise that non-sequential operation (i.e., scheduling of PDSCH A) is possible.

Alternatively, a pair of PDCCH 1 and PDSCH B and a pair of PDCCH 3 and PDSCH A may be compared to check whether the condition of non-sequential operation is satisfied, and by comparing the pair of PDCCH 2 and PDSCH B and the pair of PDCCH 3 and PDSCH A, it may be checked whether the condition of out-of-order operation is satisfied. When even one of the two conditions is satisfied, the base station and the UE may promise that non-sequential operation can be applied (i.e., scheduling of PDSCH A).

Alternatively, one representative CORESET pool among the CORESET pools of the two PDCCHs (or DCI transmitted through the two PDCCHs) scheduled for PDSCH B may be determined, and it may be determined whether out-of-order operation is applicable based on the representative CORESET pool.

For example, in FIG. 9, when the representative CORESET pool is CORESET pool 0, since the representative CORESET pool and the CORESET pool associated with PDCCH 3 are different from each other, application of out-of-order operation (i.e., scheduling of PDSCH A) may be possible. In addition, when the representative CORESET pool is CORESET pool 1, since the representative CORESET pool and the CORESET pool associated with PDCCH 3 are the same, application of out-of-order operation (i.e., scheduling of PDSCH A) may be impossible.

As another example, when the same PDCCH is repeatedly transmitted through different CORESET pools, the base station and the UE may promise not to apply out-of-order operation. Specifically, when the same PDCCH is repeatedly transmitted to different CORESET pools, an operation is performed according to an in-order-operation, and a PDCCH ending symbol may be determined based on the time of a DCI transmitted later in time order among two PDCCHs.

That is, for any two HARQ process IDs in a given scheduled cell, if the UE is scheduled to start receiving the first PDSCH starting at symbol j by the PDCCH ending at symbol i, a UE may not expect to be scheduled to receive a PDSCH starting earlier than the end of the first PDSCH with a PDCCH ending later than symbol i.

And, for any two HARQ process IDs in a given scheduled cell, if scheduled to start the first PUSCH transmission starting at symbol j by the PDCCH ending at symbol i for the UE, the UE may not expect to be scheduled to transmit a PUSCH starting earlier than the end of the first PUSCH by a PDCCH ending later than symbol i.

Similarly, a similar problem may occur for out-of-sequence application between the scheduling DCI and the scheduled PUSCH, and a similar problem may also occur for the out-of-sequence application between the scheduling DCI and the scheduled PUCCH. The above-described method may also be applied to non-sequential application between scheduling DCI and scheduled PUSCH/PUCCH.

In the above-described embodiment, schemes related to beam/TCI of PDSCH may be equally extended and applied to beam/TCI determination of PUSCH when UL TCI for PUSCH is introduced.

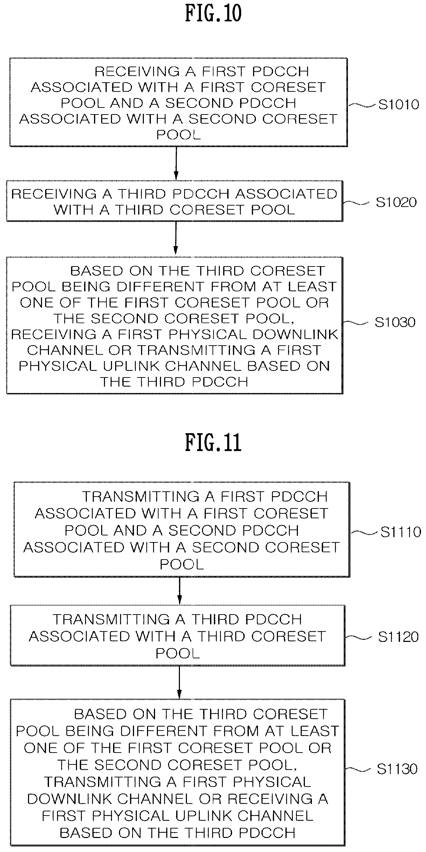

Hereinafter, referring to FIG. 10, an operation in which a UE performs communication will be described in detail.

FIG. 10 is a diagram for describing a communication performance operation of a UE according to an embodiment of the present disclosure.

The UE may receive a first PDCCH associated with the first CORESET pool and a second PDCCH associated with the second CORESET pool from the base station (S1010).

Here, the first PDCCH may end at the first symbol (i.e., the end time of the 1st PDCCH is the first symbol), and the second PDCCH may end at the second symbol (i.e., the end time of the second PDCCH is the second symbol). Here, the second symbol may be a symbol later than the first symbol. That is, the second CORESET pool ends after the first CORESET pool, and the first PDCCH may be transmitted from the base station to the UE later than the second PDCCH.

And, the first PDCCH and the second PDCCH may include scheduling information for the second physical downlink channel and/or the second physical uplink channel. For example, the first PDCCH and the second PDCCH may include the same scheduling information (or the same DCI) for scheduling the same channel.

When CORESET pool 1 corresponds to TRP 1 and CORESET pool 2 corresponds to TRP 2, TRP 1 and TRP 2 may transmit the same PDCCH (or DCI included in the corresponding PDCCH) repeatedly/dividedly. That is, the third PDCCH may be transmitted from the base station to the UE at a later time point than the first PDCCH and the second PDCCH.

The UE may receive the third PDCCH associated with the third CORESET pool from the base station (S1020). Here, the third PDCCH may end at a third symbol later than the second symbol.

Based on the third CORESET pool being different from at least one of the first CORESET pool and the second CORESET pool, the UE may receive the first physical downlink channel from the base station or transmit the first physical uplink channel to the base station based on the third PDCCH (S1030).

Here, reception of the first physical downlink channel or transmission of the first physical uplink channel may start before the end of the second physical downlink channel or the second physical uplink channel.

For example, when both the first CORESET pool and the second CORESET pool or one of the first CORESET pool and the second CORESET pool are different from the third CORESET pool, the UE may receive the first physical downlink channel from the base station or transmit the first physical uplink channel to the base station based on the third PDCCH.

As another example, when a specific CORESET pool (i.e., a representative CORESET pool) among the first CORESET pool and the second CORESET pool is different from the third CORESET pool, the UE may receive the first physical downlink channel from the base station or transmit the first physical uplink channel to the base station based on the third PDCCH.

Here, a specific CORESET pool may be indicated/configured in various ways or predefined.

For example, a specific CORESET pool may be indicated through at least one of a radio resource control (RRC) message, a medium access control-control element (MAC-CE), or downlink control information (DCI).

As another example, a specific CORESET pool may be determined based on the size of an index value of each of the first CORESET pool and the second CORESET pool, or the size of an index value of a CORESET associated with each of the first PDCCH and the second PDCCH.

As another example, a specific CORESET pool may be determined based on a time order or a frequency order in which the first PDCCH and the second PDCCH are received.

The UE may receive the second physical downlink channel from the base station or transmit the second physical uplink channel to the base station based on information associated with a specific COREST pool and the scheduling information.

For example, information related to a specific CORESET pool may include information related to a state of a transmission configuration indicator (TCI) configured for the specific CORESET pool.

Here, information related to the same TCI state may be configured in the first CORESET pool and the second CORESET pool, but is not limited thereto, and information related to different TCI states may be configured.

In addition, the information related to the transmission configuration indicator state may include at least one of a table in which the TCI state for the codepoint of the TCI field is defined or a TCI state configured for one or more CORESETs included in a specific CORESET pool.

For example, based on the (time) offset value between each of the first PDCCH reception time and the second PDCCH reception time and the second physical downlink channel reception time being less than a predetermined threshold value (e.g., the value corresponding to the higher layer parameter ('timeDurationForQCL')), the second physical downlink channel may be transmitted from the base station to the UE based on one of the TCI states (e.g., default TCI state (or default beam corresponding to default TC state)) configured for one or more CORESETs included in a specific CORESET pool.

As another example, information associated with a specific CORESET pool may include a physical uplink control channel (PUCCH) resource set configured for the specific CORESET pool. And, the second physical uplink channel may be transmitted based on a PUCCH resource indicated by the first PDCCH or the second PDDCH among PUCCH resource sets configured for a specific CORESET pool.

Information associated with a specific CORESET pool may include an index value of the specific CORESET pool. In addition, a downlink assignment index for determining an encoding order of acknowledgment (ACK)/negative acknowledgment (NACK) for the second physical downlink channel and resources of a second physical uplink channel to which encoding data of ACK/NACK will be transmitted may be based on an index value of a specific CORESET pool.

As another example, for a UE, a second physical uplink channel (e.g., PUCCH or PUSCH) associated with a specific CORESET pool and a physical uplink channel associated with another CORESET pool may be scheduled so as not to collide with each other.

In another embodiment of the present disclosure, based on the third CORESET pool being the same as at least one of the first CORESET pool and the second CORESET pool, the first physical downlink channel or the first physical uplink channel may not be scheduled by the third PDCCH. That is, when the third CORESET pool is identical to at least one of the first CORESET pool and the second CORESET pool, out-of-order operation may not be permitted.

FIG. 11 is a diagram for describing an operation of a base station performing communication according to an embodiment of the present disclosure.

The base station may transmit a first PDCCH associated with the first CORESET pool and a second PDCCH associated with the second CORESET pool to the UE (S1110).

And, the base station may transmit the third PDCCH associated with the third CORESET pool to the terminal (S1120).

Here, since the timing of transmitting the first PDCCH, the second PDCCH, and the third PDCCH to the UE has been specifically described with reference to FIG. 10, duplicate descriptions will be omitted.

Based on the third CORESET pool being different from at least one of the first CORESET pool and the second CORESET pool, the base station may transmit the first physical downlink channel to the terminal or receive the first physical uplink channel from the base station based on the third PDCCH (S1130).

Here, reception of the first physical downlink channel or transmission of the first physical uplink channel may start before the second physical downlink channel or the end of the second physical uplink channel.

In one embodiment, the base station may transmit the second physical downlink channel to the terminal or receive the second physical uplink channel from the UE, based on information associated with a specific CORESET pool among the first CORESET pool and the second CORESET pool, and scheduling information.

Since information and operations related to a specific CORESET pool have been specifically described with reference to FIG. 10, duplicate descriptions will be omitted.

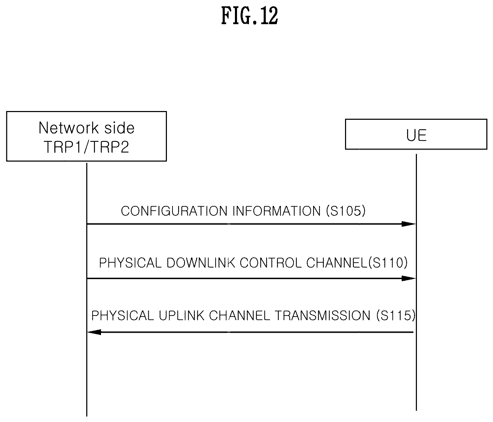

FIG. 12 is a diagram for describing a signaling procedure of a network side and a UE according to an embodiment of the present disclosure.

FIG. 12 shows an example of signaling between a network side and a UE in an M-TRP situation to which the above-described embodiments (e.g., Embodiment 1, Embodiment 2, Embodiment 3, Embodiment 4, Embodiment 5, Embodiment 6, Embodiment 7, or a combination of one or more of the sub- Embodiments) of the present disclosure may be applied.

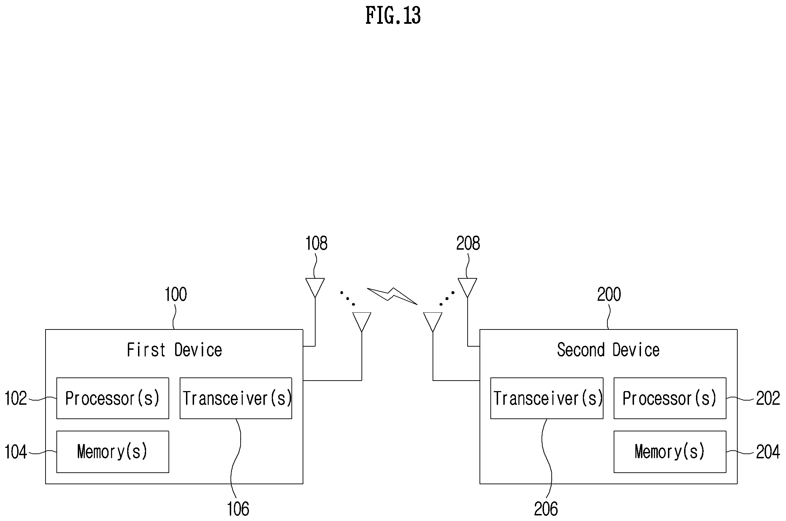

Here, the UE/network side is exemplary and may be applied to various devices as described with reference to FIG. 13. FIG. 12 is for convenience of description and does not limit the scope of the present disclosure. In addition, some step(s) shown in FIG. 12 may be omitted depending on circumstances and/or configurations. In addition, in the operation of the network side/UE of FIG. 12, the above-described uplink transmission/reception operation, M-TRP related operation, etc. may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). For example, an ideal/non-ideal backhaul may be established between TRP 1 and TRP 2 constituting the network side. In addition, although the following description is based on a plurality of TRPs, this may be equally extended and applied to transmission through a plurality of panels/cells, and may also be extended and applied to transmission through a plurality of RRHs/RRUs.

In addition, although it is described based on "TRP" in the following description, as mentioned above, "TRP" may be replaced with an expression of a panel, an antenna array, a cell (e.g., macro cell/small cell/pico cell, etc.), a transmission point (TP), a base station (base station, gNB, etc.) and may be applied. As described above, TRPs may be classified according to information (e.g., CORESET index, ID) on the CORESET group (or CORESET pool).

For example, when one UE is configured to transmit/receive with multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.).

In addition, a base station may mean a generic term for an object that transmits and receives data with a terminal. For example, the base station may be a concept including one or more transmission points (TPs), one or more transmission and reception points (TRPs), and the like. Also, the TP and/or the TRP may include a panel of a base station, a transmission and reception unit, and the like.

The UE may receive configuration information from the network side through/using TRP1 and/or TRP2 (S105).

The configuration information may include information related to the CORESET pool. The configuration information may include information related to network-side configuration (i.e., TRP configuration), resource allocation information related to transmission and reception based on M-TRP, and the like. The configuration information may be transmitted through higher layers (e.g., RRC, MAC CE). In addition, when the configuration information is defined or set in advance, the corresponding step may be omitted.

For example, as in the above-described embodiment (e.g., Embodiment 1, Embodiment 2, Embodiment 3, Embodiment 4, Embodiment 5, Embodiment 6, Embodiment 7, or a combination of one or more of the sub-Embodiments), the configuration information may include CORESET-related configuration information (e.g., ControlResourceSet IE). The CORESET-related configuration information may include a CORESET-related ID (e.g., controlResourceSetID), a CORESET pool index (e.g., CORESETPoolIndex) for CORESET, time/frequency resource configuration of CORESET, and TCI information related to CORESET.

For example, an operation in which the UE (100 or 200 of FIG. 13) in step S110 receives the configuration information from the network side (200 or 100 of FIG. 13) may be implemented by the device of FIG. 13 to be described below. For example, referring to FIG. 13, one or more processors 102 may control one or more transceivers 106 and/or one or more memories 104 to receive the configuration information, and one or more transceivers 106 may receive the configuration information from a network side.

At the network side, one or more physical downlink control channels (PDCCHs) may be transmitted to the UE through/using TRP 1 and/or TRP 2 (S110). For example, the UE may receive one or more PDCCHs via/using TRP1 and/or TRP2 to the network side.

TRP 1 and/or TRP 2 may transmit repeatedly/divide a PDCCH including the same DCI to the UE. That is, PDCCHs transmitted by TRP 1 and/or TRP 2 may schedule the same channel.

For example, an operation in which the UE (100 or 200 of FIG. 13 ) receives the PDCCH from the network side (200 or 100 of FIG. 13 ) in step S110 described above may be implemented by the device of FIG. 13 to be described below. For example, referring to FIG. 13, one or more processors 102 may control one or more transceivers 106 and/or one or more memories 104, etc. to receive the PDCCH, and the one or more transceivers 106 may receive the PDCCH from the network side.

The UE may transmit a physical uplink channel to the network side (S115). For example, the UE may transmit a physical uplink channel scheduled by the PDCCH received from the network side to the network side. Here, the physical uplink channel may include PUCCH including ACK/NACK for PUSCH or PDSCH.

For example, the operation of transmitting the physical uplink channel by the UE (100 or 200 of FIG. 13) in step S115 described above may be implemented by the device of FIG. 13 below. For example, referring to FIG. 13, one or more processors 102 may control one or more transceivers 106 and/or one or more memories 104 to transmit a physical uplink channel, and the one or more transceivers 106 may transmit a physical uplink channel to a network side.

However, when the PDCCH transmitted by the network side to the UE schedules a physical downlink channel, the UE may receive the physical downlink channel (e.g., PDSCH) from the network side through TRP 1 and/or TRP 2.

For example, an operation in which the UE (100 or 200 of FIG. 13) receives a physical downlink may be implemented by the device of FIG. 13 below. For example, referring to FIG. 13, the one or more processors 102 may control one or more transceivers 106 and/or one or more memories 104 to receive a physical downlink channel, and the one or more transceivers 106 may receive the physical downlink channel to the network side.

General Device to which the Present Disclosure may be applied

FIG. 13 is a diagram which illustrates a block diagram of a wireless communication system according to an embodiment of the present disclosure.

In reference to FIG. 13, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/-circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs (Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form. Accordingly, the above-described detailed description should not be restrictively construed in every aspect and should be considered to be illustrative. The scope of the present invention is determined by the attached claims.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

**1.** A method comprising:

receiving (S1010), by a user equipment, UE, (100) from a base station (200), a first physical downlink control channel, PDCCH, associated with a first control resource set, CORESET, pool and a second PDCCH associated with a second CORESET pool;

receiving (S1020), by the UE (100) from the base station (200), a third PDCCH associated with a third CORESET pool; and

based on the third CORESET pool being different from both of the first CORESET pool and the second CORESET pool, receiving (S1030), by the UE (100) based on the third PDCCH, a first physical downlink channel from the base station (200) or transmitting (S1030) a first physical uplink channel to the base station (200),

wherein the first PDCCH ends in a first symbol, the second PDCCH ends in a second symbol later than the first symbol, and the third PDCCH ends in a third symbol later than the second symbol,

wherein the first PDCCH and the second PDCCH include same scheduling information for a second physical downlink channel or a second physical uplink channel, and

wherein reception of the first physical downlink channel or transmission of the first physical uplink channel starts before an end of the second physical downlink channel or the second physical uplink channel,

wherein, based on i) the third CORESET pool being identical to the first CORESET pool and different from the second CORESET pool or ii) the third CORESET pool being identical to the second CORESET pool and different from the first CORESET pool, scheduling of the first physical downlink channel or the first physical uplink channel is not allowed.

2. The method of claim 1, wherein:
information related to same TCI state is configured for the first CORESET pool and the second CORESET pool.

3. The method of claim 1, wherein:
based on information associated with a specific CORESET pool among the first CORESET pool and the second CORESET pool, and the scheduling information, the second physical downlink channel is received from the base station (200) or the second physical uplink channel is transmitted to the base station (200).

4. The method of claim 3, wherein:
information associated with the specific CORESET pool includes information related to a transmission configuration indicator, TCI, state configured for the specific CORESET pool.

5. The method of claim 4, wherein:

the information related to the TCI state configured for the specific CORESET pool includes TCI states configured for at least one CORESET included in the specific CORESET pool, and

based on an offset value between each of first PDCCH reception time and second PDCCH reception time and the second physical downlink channel reception time being less than a predetermined threshold value, the second physical downlink channel is received from the base station (200) based on one of the TCI states configured for the at least one CORESET.

6. The method of claim 3, wherein:
the second physical uplink channel associated with the specific CORESET pool and a physical uplink channel associated with another CORESET pool may be scheduled so as not to collide with each other.

7. The method of claim 3, wherein:

the information associated with the specific CORESET pool includes a physical uplink control channel, PUCCH, resource set configured for the specific CORESET pool, and

the second physical uplink channel is transmitted based on a PUCCH resource indicated by the first PDCCH or the second PDDCH among the PUCCH resource set.

8. The method of claim 3, wherein:

the information associated with the specific CORESET pool includes an index value of the specific CORESET pool, and

a downlink assignment index, DAI, for determining an encoding order of acknowledgement/negative acknowledgement, ACK/NACK, for the second physical downlink channel and resources of the second physical uplink channel through which the encoded data of the ACK/NACK is to be transmitted are based on an index value of the specific CORESET pool.

**9.** The method of claim 3, wherein:
the specific CORESET pool is indicated through at least one of a radio resource control, RRC, message, a medium access control-control element, MAC-CE, or downlink control information, DCI.

**10.** The method of claim 3, wherein:
the specific CORESET pool is determined based on a size of an index value of each of the first CORESET pool and the second CORESET pool, or a size of an index value of a CORESET associated with each of the first PDCCH and the second PDCCH.

**11.** The method of claim 3, wherein:
the specific CORESET pool is determined based on at least one of a time order or a frequency order in which the first PDCCH and the second PDCCH are received

**12.** A user equipment, UE, (100) comprising:

at least one transceiver (106); and
at least one processor (102) connected to the at least one transceiver (106),
wherein the processor (102) is configured to:

receive (S1010), from a base station (200) through the at least one transceiver (106), a first physical downlink control channel, PDCCH, associated with a first control resource set, CORESET, pool and a second PDCCH associated with a second CORESET pool;
receive (S1020), from the base station (200) through the at least one transceiver (106), a third PDCCH associated with a third CORESET pool; and
based on the third CORESET pool being different from both of the first CORESET pool and the second CORESET pool, receive (S1030), based on the third PDCCH, a first physical downlink channel from the base station (200) or transmitting (S1030) a first physical uplink channel to the base station (200) through the at least one transceiver (106),
wherein the first PDCCH ends in a first symbol, the second PDCCH ends in a second symbol later than the first symbol, and the third PDCCH ends in a third symbol later than the second symbol,
wherein the first PDCCH and the second PDCCH include same scheduling information for a second physical downlink channel or a second physical uplink channel, and
wherein reception of the first physical downlink channel or transmission of the first physical uplink channel starts before an end of the second physical downlink channel or the second physical uplink channel,
wherein, based on i) the third CORESET pool being identical to the first CORESET pool and different from the second CORESET pool or ii) the third CORESET pool being identical to the second CORESET pool and different from the first CORESET pool, scheduling of the first physical downlink channel or the first physical uplink channel is not allowed.

**Patentansprüche**

**1.** Verfahren, das umfasst:

Empfangen (S1010), durch ein Benutzergerät, UE, (100) von einer Basisstation (200), eines ersten physischen Downlink-Steuerkanals, PDCCH, der mit einem ersten Steuerressourcensatz-Pool, CORESET-Pool, assoziiert ist, und eines zweiten PDCCH, der mit einem zweiten CORESET-Pool assoziiert ist;
Empfangen (S1020), durch das UE (100) von der Basisstation (200), eines dritten PDCCH, der mit einem dritten CORESET-Pool assoziiert ist; und
basierend darauf, dass sich der dritte CORESET-Pool sowohl vom ersten CORESET-Pool als auch vom zweiten CORESET-Pool unterscheidet, Empfangen (S1030), durch das UE (100) basierend auf dem dritten PDCCH, eines ersten physischen Downlink-Kanals von der Basisstation (200) oder Übertragen (S1030) eines ersten physischen Uplink-Kanals an die Basisstation (200),
wobei der erste PDCCH in einem ersten Symbol endet, der zweite PDCCH in einem zweiten Symbol später als das erste Symbol endet und der dritte PDCCH in einem dritten Symbol später als das zweite Symbol endet,
wobei der erste PDCCH und der zweite PDCCH dieselben Planungsinformationen für einen zweiten physischen Downlink-Kanal oder einen zweiten physischen Uplink-Kanal beinhalten und
wobei der Empfang des ersten physischen Downlink-Kanals oder die Übertragung des ersten physischen Uplink-Kanals vor einem Ende des zweiten physischen Downlink-Kanals oder des zweiten physischen Uplink-Kanals beginnt,

wobei basierend darauf, dass i) der dritte CORESET-Pool identisch mit dem ersten CORESET-Pool ist und sich vom zweiten CORESET-Pool unterscheidet oder ii) der dritte CORESET-Pool identisch mit dem zweiten CORESET-Pool ist und sich vom ersten CORESET-Pool unterscheidet, das Planen des ersten physischen Downlink-Kanals oder des ersten physischen Uplink-Kanals nicht zulässig ist.

2.  Verfahren nach Anspruch 1, wobei:
    Informationen, die sich auf denselben TCI-Zustand beziehen, für den ersten CORESET-Pool und den zweiten CORESET-Pool konfiguriert sind.

3.  Verfahren nach Anspruch 1, wobei:
    basierend auf Informationen, die mit einem spezifischen CORESET-Pool aus dem ersten CORESET-Pool und dem zweiten CORESET-Pool assoziiert sind, und den Planungsinformationen der zweite physische Downlink-Kanal von der Basisstation (200) empfangen wird oder der zweite physische Uplink-Kanal an die Basisstation (200) übertragen wird.

4.  Verfahren nach Anspruch 3, wobei:
    Informationen, die mit dem spezifischen CORESET-Pool assoziiert sind, Informationen bezüglich eines Übertragungskonfigurationsindikator-Zustands, TCI-Zustands, beinhalten, der für den spezifischen CORESET-Pool konfiguriert ist.

5.  Verfahren nach Anspruch 4, wobei:

    die Informationen bezüglich des TCI-Zustands, der für den spezifischen CORESET-Pool konfiguriert ist, TCI-Zustände beinhalten, die für mindestens einen CORESET konfiguriert sind, der im spezifischen CORESET-Pool beinhaltet ist, und
    basierend darauf, dass ein Versatzwert zwischen jeder einer Empfangszeit des ersten PDCCH und einer Empfangszeit des zweiten PDCCH und der Empfangszeit des zweiten physischen Downlink-Kanals kleiner als ein vorbestimmter Schwellenwert ist, der zweite physische Downlink-Kanal von der Basisstation (200) basierend auf einem der TCI-Zustände empfangen wird, die für den mindestens einen CORESET konfiguriert sind.

6.  Verfahren nach Anspruch 3, wobei:
    der zweite physische Uplink-Kanal, der mit dem spezifischen CORESET-Pool assoziiert ist, und ein physischer Uplink-Kanal, der mit einem anderen CORESET-Pool assoziiert ist, so geplant werden können, dass sie nicht miteinander kollidieren.

7.  Verfahren nach Anspruch 3, wobei:

    die Informationen, die mit dem spezifischen CORESET-Pool assoziiert sind, einen Ressourcensatz eines physischen Uplink-Steuerkanals, PUCCH-Ressourcensatz, beinhalten, der für den spezifischen CORESET-Pool konfiguriert ist, und
    der zweite physische Uplink-Kanal basierend auf einer PUCCH-Ressource übertragen wird, die durch den ersten PDCCH oder den zweiten PDDCH aus dem PUCCH-Ressourcensatz angegeben wird.

8.  Verfahren nach Anspruch 3, wobei:

    die Informationen, die mit dem spezifischen CORESET-Pool assoziiert sind, einen Indexwert des spezifischen CORESET-Pools beinhalten, und
    ein Downlink-Zuweisungsindex, DAI, zum Bestimmen einer Codierreihenfolge von Bestätigung/negativer Bestätigung, ACK/NACK, für den zweiten physischen Downlink-Kanal und Ressourcen des zweiten physischen Uplink-Kanals, über den die codierten Daten der ACK/NACK zu übertragen sind, auf einem Indexwert des spezifischen CORESET-Pools basieren.

9.  Verfahren nach Anspruch 3, wobei:
    der spezifische CORESET-Pool durch mindestens eine von einer Funkressourcensteuerungsnachricht, RRC-Nachricht, einem Medienzugriffssteuerungssteuerungselement, MAC-CE-Element, oder von Downlink-Steuerungsinformationen, DCI, angegeben wird.

10. Verfahren nach Anspruch 3, wobei:
der spezifische CORESET-Pool basierend auf einer Größe eines Indexwerts jedes des ersten CORESET-Pools und des zweiten CORESET-Pools oder einer Größe eines Indexwerts eines CORESET, der mit jedem des ersten PDCCH und des zweiten PDCCH assoziiert ist, bestimmt wird.

11. Verfahren nach Anspruch 3, wobei:
der spezifische CORESET-Pool basierend auf mindestens einem von einer Zeitreihenfolge oder einer Frequenzreihenfolge, in der der erste PDCCH und der zweite PDCCH empfangen werden, bestimmt wird.

12. Benutzergerät (UE) (100), das umfasst:

mindestens einen Transceiver (106) und
mindestens einen Prozessor (102), der mit dem mindestens einen Transceiver (106) verbunden ist,
wobei der Prozessor (102) dazu konfiguriert ist:

von einer Basisstation (200) durch den mindestens einen Transceiver (106), einen ersten physischen Downlink-Steuerkanal, PDCCH, der mit einem ersten Steuerressourcensatz-Pool, CORESET-Pool, assoziiert ist, und einen zweiten PDCCH, der mit einem zweiten CORESET-Pool assoziiert ist, zu empfangen (S1010);
von der Basisstation (200) durch den mindestens einen Transceiver (106), einen dritten PDCCH, der mit einem dritten CORESET-Pool assoziiert ist, zu empfangen (S1020) und
basierend darauf, dass sich der dritte CORESET-Pool sowohl vom ersten CORESET-Pool als auch vom zweiten CORESET-Pool unterscheidet, basierend auf dem dritten PDCCH, einen ersten physischen Downlink-Kanal von der Basisstation (200) zu empfangen (S1030) oder einen ersten physischen Uplink-Kanal an die Basisstation (200) durch den mindestens einen Transceiver (106) zu übertragen (S1030),
wobei der erste PDCCH in einem ersten Symbol endet, der zweite PDCCH in einem zweiten Symbol später als das erste Symbol endet und der dritte PDCCH in einem dritten Symbol später als das zweite Symbol endet,
wobei der erste PDCCH und der zweite PDCCH dieselben Planungsinformationen für einen zweiten physischen Downlink-Kanal oder einen zweiten physischen Uplink-Kanal beinhalten und
wobei der Empfang des ersten physischen Downlink-Kanals oder die Übertragung des ersten physischen Uplink-Kanals vor einem Ende des zweiten physischen Downlink-Kanals oder des zweiten physischen Uplink-Kanals beginnt,
wobei basierend darauf, dass i) der dritte CORESET-Pool identisch mit dem ersten CORESET-Pool ist und sich vom zweiten CORESET-Pool unterscheidet oder ii) der dritte CORESET-Pool identisch mit dem zweiten CORESET-Pool ist und sich vom ersten CORESET-Pool unterscheidet, das Planen des ersten physischen Downlink-Kanals oder des ersten physischen Uplink-Kanals nicht zulässig ist.

**Revendications**

1. Procédé comprenant les étapes suivantes :

recevoir (S1010), par un équipement utilisateur, UE, (100) depuis une station de base (200), un premier canal physique de contrôle de liaison descendante, PDCCH, associé à un premier groupe d'ensemble de ressources de contrôle, CORESET, et un deuxième PDCCH associé à un deuxième groupe de CORESET ;
recevoir (S1020), par l'UE (100), depuis la station de base (200), un troisième PDCCH associé à un troisième groupe de CORESET ; et
sur la base du fait que le troisième groupe de CORESET est différent à la fois du premier groupe de CORESET et du deuxième groupe de CORESET, recevoir (S1030), par l'UE (100), sur la base du troisième PDCCH, un premier canal physique de liaison descendante depuis la station de base (200) ou transmettre (S1030) un premier canal physique de liaison montante à la station de base (200),
où le premier PDCCH est terminé par un premier symbole, le deuxième PDCCH est terminé par un deuxième symbole postérieur au premier symbole et le troisième PDCCH est terminé par un troisième symbole postérieur au deuxième symbole,
où le premier PDCCH et le deuxième PDCCH comprennent les mêmes informations de planification pour un deuxième canal physique de liaison descendante ou un deuxième canal physique de liaison montante, et où la réception du premier canal physique de liaison descendante ou la transmission du premier canal physique de liaison montante commence avant la fin du deuxième canal physique de liaison descendante ou du deuxième canal physique de liaison montante,

où, sur la base i) du troisième groupe de CORESET étant identique au premier groupe de CORESET et étant différent du deuxième groupe de CORESET ou ii) du troisième groupe de CORESET étant identique au deuxième groupe de CORESET et étant différent du premier groupe de CORESET, la planification du premier canal physique de liaison descendante ou du premier canal physique de liaison montante n'est pas autorisée.

2. Procédé selon la revendication 1, dans lequel :
les informations relatives au même état TCI sont configurées pour le premier groupe de CORESET et le deuxième groupe de CORESET.

3. Procédé selon la revendication 1, dans lequel :
sur la base des informations associées à un groupe de CORESET spécifique parmi le premier groupe de CORESET et le deuxième groupe de CORESET, et des informations de planification, le deuxième canal physique de liaison descendante est reçu depuis la station de base (200) ou le deuxième canal physique de liaison montante est transmis à la station de base (200).

4. Procédé selon la revendication 3, dans lequel :
les informations associées au groupe de CORESET spécifique comprennent des informations relatives à un état d'indicateur de configuration de transmission, TCI, configuré pour le groupe de CORESET spécifique.

5. Procédé selon la revendication 4, dans lequel :

les informations relatives à l'état TCI configuré pour le groupe de CORESET spécifique comprennent des états TCI configurés pour au moins un CORESET inclus dans le groupe de CORESET spécifique, et
sur la base d'une valeur de décalage se situant entre chaque premier temps de réception PDCCH et deuxième temps de réception PDCCH et du deuxième temps de réception de canal physique de liaison descendante étant inférieur à une valeur seuil prédéterminée, le deuxième canal physique de liaison descendante est reçu depuis la station de base (200) sur la base de l'un des états TCI configurés pour l'au moins un CORESET.

6. Procédé selon la revendication 3, dans lequel :
le deuxième canal physique de liaison montante associé au groupe de CORESET spécifique et un canal physique de liaison montante associé à un autre groupe de CORESET peuvent être planifiés de manière à ne pas entrer en collision l'un avec l'autre.

7. Procédé selon la revendication 3, dans lequel :

les informations associées au groupe de CORESET spécifique comprennent un ensemble de ressources de canal physique de contrôle de liaison montante, PUCCH, configuré pour le groupe de CORESET spécifique, et le deuxième canal physique de liaison montante est transmis sur la base d'une ressource PUCCH indiquée par le premier PDCCH ou le deuxième PDDCH parmi l'ensemble de ressources PUCCH.

8. Procédé selon la revendication 3, dans lequel :

les informations associées au groupe de CORESET spécifique comprennent une valeur d'index du groupe de CORESET spécifique, et
un index d'affectation de liaison descendante, DAI, pour déterminer un ordre de codage d'accusé de réception/accusé de réception négatif, ACK/NACK, pour le deuxième canal physique de liaison descendante et les ressources du deuxième canal physique de liaison montante par lequel les données codées de l'ACK/NACK doivent être transmises sont basées sur une valeur d'index du groupe de CORESET spécifique.

9. Procédé selon la revendication 3, dans lequel :
le groupe de CORESET spécifique est indiqué par au moins un élément parmi un message de contrôle des ressources radio, un RRC, un élément de contrôle-contrôle d'accès au support, MAC-CE, ou des informations de contrôle de liaison descendante, DCI.

**10.** Procédé selon la revendication 3, dans lequel :
le groupe de CORESET spécifique est déterminé sur la base de la taille d'une valeur d'index de chacun des premier et deuxième groupes CORESET, ou de la taille d'une valeur d'index d'un CORESET associé à chacun des premier PDCCH et deuxième PDCCH.

**11.** Procédé selon la revendication 3, dans lequel :
le groupe de CORESET spécifique est déterminé sur la base d'au moins un ordre temporel ou un ordre fréquentiel selon lequel le premier PDCCH et le deuxième PDCCH sont reçus.

**12.** Équipement utilisateur, UE, (100), comprenant :

au moins un émetteur-récepteur (106) ; et
au moins un processeur (102) connecté à l'au moins un émetteur-récepteur (106),
le processeur (102) étant configuré pour :

recevoir (S1010), depuis une station de base (200), par l'intermédiaire de l'au moins un émetteur-récepteur (106), un premier canal physique de commande de liaison descendante, PDCCH, associé à un premier groupe d'ensemble de ressources de contrôle, CORESET, et un deuxième PDCCH associé à un deuxième groupe de CORESET ; recevoir (S1020), depuis la station de base (200), par l'intermédiaire de l'au moins un émetteur-récepteur (106), un troisième PDCCH associé à un troisième groupe de CORESET ; et
sur la base du fait que le troisième groupe de CORESET est différent à la fois du premier groupe de CORESET et du deuxième groupe de CORESET, recevoir (S1030), sur la base du troisième PDCCH, un premier canal physique de liaison descendante depuis la station de base (200) ou transmettre (S1030) un premier canal physique de liaison montante à la station de base (200) par l'intermédiaire de l'au moins un émetteur-récepteur (106),
où le premier PDCCH est terminé par un premier symbole, le deuxième PDCCH est terminé par un deuxième symbole postérieur au premier symbole et le troisième PDCCH est terminé par un troisième symbole postérieur au deuxième symbole,
où le premier PDCCH et le deuxième PDCCH comprennent les mêmes informations de planification pour un deuxième canal physique de liaison descendante ou un deuxième canal physique de liaison montante, et où la réception du premier canal physique de liaison descendante ou la transmission du premier canal physique de liaison montante commence avant la fin du deuxième canal physique de liaison descendante ou du deuxième canal physique de liaison montante,
où, sur la base i) du troisième groupe de CORESET étant identique au premier groupe de CORESET et étant différent du deuxième groupe de CORESET ou ii) du troisième groupe de CORESET étant identique au deuxième groupe de CORESET et étant différent du premier groupe de CORESET, la planification du premier canal physique de liaison descendante ou du premier canal physique de liaison montante n'est pas autorisée.

# FIG.1

# FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

Resource grid

A carrier
(up to 3300 subcarriers, i.e., 275 RBs)

A BWP

1 RB=12 subcarrier

1 RE

1 subcarrier

1 Symbol

l=0

k=0

# FIG.6

INITIAL CELL SEARCH

PSS/SSS& [DL RS]& PBCH — S601

SYSTEM INFORMATION RECEPTION

PDCCH/ PDSCH (BCCH) — S602

RANDOM ACCESS PROCEDURE

PRACH — S603

PDCCH/ PDSCH — S604

PUSCH — S605

PDCCH/ PDSCH — S606

GENERAL DL/UL Tx/Rx

PDCCH/ PDSCH — S607

PUSCH/ PUCCH — S608

· DL/UL ACK/NACK
· UE CQI/PMI RI REPORT USING PUSCH AND PUCCH

# FIG.7

TRP 1    TRP 2

Layer group #1     Layer group #2
for CW #1          for CW #1

UE1

(a)

TRP 1    TRP 2

Layer group #1     Layer group #2
for CW #1          for CW #2

UE1

(b)

# FIG.8

PDCCH 1
(CORESET pool 0)

PDCCH 2
(CORESET pool 1)

Symbol i

Symbol i'

PDSCH
(/PUSCH)

PUCCH

t

FIG.9

## FIG.10

RECEIVING A FIRST PDCCH ASSOCIATED WITH A FIRST CORESET POOL AND A SECOND PDCCH ASSOCIATED WITH A SECOND CORESET POOL — S1010

RECEIVING A THIRD PDCCH ASSOCIATED WITH A THIRD CORESET POOL — S1020

BASED ON THE THIRD CORESET POOL BEING DIFFERENT FROM AT LEAST ONE OF THE FIRST CORESET POOL OR THE SECOND CORESET POOL, RECEIVING A FIRST PHYSICAL DOWNLINK CHANNEL OR TRANSMITTING A FIRST PHYSICAL UPLINK CHANNEL BASED ON THE THIRD PDCCH — S1030

## FIG.11

TRANSMITTING A FIRST PDCCH ASSOCIATED WITH A FIRST CORESET POOL AND A SECOND PDCCH ASSOCIATED WITH A SECOND CORESET POOL — S1110

TRANSMITTING A THIRD PDCCH ASSOCIATED WITH A THIRD CORESET POOL — S1120

BASED ON THE THIRD CORESET POOL BEING DIFFERENT FROM AT LEAST ONE OF THE FIRST CORESET POOL OR THE SECOND CORESET POOL, TRANSMITTING A FIRST PHYSICAL DOWNLINK CHANNEL OR RECEIVING A FIRST PHYSICAL UPLINK CHANNEL BASED ON THE THIRD PDCCH — S1130

FIG.12

```
┌─────────────────┐                              ┌─────────────────┐
│  Network side   │                              │       UE        │
│   TRP1/TRP2     │                              │                 │
└────────┬────────┘                              └────────┬────────┘
         │                                                │
         │      CONFIGURATION INFORMATION (S105)          │
         │───────────────────────────────────────────────>│
         │                                                │
         │   PHYSICAL DOWNLINK CONTROL CHANNEL(S110)       │
         │───────────────────────────────────────────────>│
         │                                                │
         │  PHYSICAL UPLINK CHANNEL TRANSMISSION (S115)    │
         │<───────────────────────────────────────────────│
         │                                                │
```

EP 4 304 278 B1

# FIG.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020198645 A1
- US 20210022167 A1

**Non-patent literature cited in the description**

- physical channels and modulation. *TS 38.211*
- multiplexing and channel coding. *TS 38.212*
- physical layer procedures for control. *TS 38.213*
- physical layer procedures for data. *TS 38.214*
- NR and NG-RAN(New Generation-Radio Access Network) overall description. *TS 38.300*
- radio resource control protocol specification. *TS 38.331*